# FASCICULE DE BREVET EUROPEEN

(11) **EP 2 424 768 B1**
(45) Date de publication et mention de la délivrance du brevet: **11.06.2014**
(21) Numéro de dépôt: 10723190.4
(22) Date de dépôt: 02.04.2010
(51) Int. Cl.: B62D 21/11

(54) **DISPOSITIF DE FIXATION D'UN BERCEAU DE MOTEUR A UN SOUBASSEMENT DE VEHICULE, UTILISATION DE CE DISPOSITIF DE FIXATION ET VEHICULE OBTENU**
VORRICHTUNG ZUR BEFESTIGUNG EINES MOTORTRÄGERS AN EINEM FAHRZEUGKAROSSERIEUNTERBAU, VERWENDUNG DER BEFESTIGUNGSVORRICHTUNG UND SICH ERGEBENDES FAHRZEUG
DEVICE FOR ATTACHING AN ENGINE CRADLE TO A VEHICLE BODY UNDERSTRUCTURE, USE OF SAID ATTACHMENT DEVICE, AND RESULTING VEHICLE

(30) Priorité: 29.04.2009 FR 0952838
(43) Date de publication de la demande: 07.03.2012
(73) Titulaire: Renault S.A.S., 92100 Boulogne-Billancourt (FR)
(72) Inventeur: KOWALSKI, Philippe, F-78180 Montigny Le Bretonneux (FR); OUMESSAOUD, Nordine, F-78210 Saint Cyr L'ecole (FR); SANS PACHERA, Patrick, F-78000 Versailles (FR)
(86) Numéro de dépôt international: PCT/FR2010/050634
(87) Numéro de publication internationale: WO 2010/125267

(56) Documents cités:
- EP-A1- 1 686 042
- EP-A1- 2 048 063
- DE-A1-102007 012 148

## Description

La présente invention concerne un dispositif de fixation d'un berceau de moteur à un soubassement de véhicule, l'utilisation de ce dispositif de fixation et le véhicule obtenu.

De façon classique, lorsqu'on adapte un véhicule automobile d'un type donné, par exemple de type berline à un autre type, par exemple de type 4 x 4 à caisse relevée, on est amené à changer les configurations du berceau support du moteur et du soubassement de la partie avant du véhicule pour l'adapter au type de véhicule concerné et répondre au cahier des charges du type de véhicule. Néanmoins, une telle opération est coûteuse car elle conduit à changer l'outil industriel de fabrication de la partie avant du véhicule.

L'invention a pour but d'adapter un véhicule automobile d'un type berline à un type 4 x 4 de façon économique, notamment dans l'adaptation de l'ensemble berceau de moteur et soubassement de la partie avant du véhicule en répondant aux exigences, notamment au choc, de cahier des charges du type de véhicule concerné.

Il est en effet proposé selon l'invention un dispositif de fixation d'un berceau de moteur à un soubassement de véhicule, pour adapter le véhicule d'un type berline à un type 4 x 4 à caisse relevée, le soubassement du véhicule dans sa partie avant étant adapté pour recevoir en fixation, par des points de fixation, le berceau de moteur, dispositif caractérisé en ce qu'il comprend :
- des bagues entretoises destinées à être montées chacune sur un point de fixation du berceau de moteur au soubassement, entre ledit berceau de moteur et le soubassement ;
- au moins une chape de fixation montée en un point de fixation du berceau de moteur au soubassement et comprenant au moins un autre point de fixation au soubassement ; et
- au moins un élément de renfort monté sur le soubassement audit autre point de fixation de la chape sur le soubassement.

Le véhicule est de préférence un véhicule automobile dont le soubassement de caisse comporte deux longerons sensiblement parallèles dans la partie avant du véhicule et supportant le berceau de moteur, ce dernier étant de configuration en parallélogramme et fixé au soubassement en quatre points de fixation correspondant aux angles du parallélogramme, respectivement deux points de fixation avant et deux points de fixation arrière.

Grâce à cette disposition, la partie avant du véhicule de type berline peut servir à la fabrication du véhicule de type 4x4 dans la gamme. Le soubassement du véhicule de type 4x4 dans la gamme est le soubassement du véhicule de type berline sur lequel ont été montés les éléments de renfort auxdits autres points de fixation de chacune des chapes sur le soubassement, et le berceau de moteur est identique, des bagues entretoises étant montées aux points de fixation du berceau de moteur au soubassement, entre ledit berceau de moteur et le soubassement, et des chapes de fixation étant montées, en liaison entre ledit berceau de moteur et le soubassement, aux points de renforcement de la fixation du berceau de moteur au soubassement.

Les bagues entretoises sont de préférence toutes de même hauteur, mais les bagues entretoises montées sur les deux points de fixation arrière peuvent être d'une hauteur différente de celle des deux bagues montées sur les points de fixation avant.

Les chapes sont de préférence montées aux points de fixation arrière, évitant ainsi en cas de choc toute intrusion du berceau de moteur dans le soubassement d'habitacle du véhicule. Néanmoins, des chapes peuvent aussi être montées sur les points de fixation avant, afin de renforcer davantage la fixation.

Les chapes comportent avantageusement chacune deux autres points de fixation, disposés de préférence au plus près d'un longeron du véhicule sur le soubassement.

L'invention concerne également l'utilisation d'un dispositif de fixation d'un berceau de moteur au soubassement d'un véhicule, tel que défini précédemment, pour adapter un véhicule de type berline à un véhicule de type 4x4 à caisse relevée, et le véhicule obtenu.

L'invention est illustrée ci-après à l'aide d'un exemple de réalisation et en référence aux dessins annexés sur lesquels :
- la figure 1 est une vue en perspective de la partie avant de soubassement d'un véhicule automobile de type berline,
- la figure 2 est une vue en perspective du berceau de moteur correspondant,
- la figure 3 est une vue en perspective de la partie avant de soubassement du véhicule précité adapté au type 4x4, et
- la figure 4 est une vue en perspective du berceau de moteur correspondant.

Sur chacune des figures on a représenté un repère orthonormé sur lequel l'axe Ox est orienté selon l'axe longitudinal vers l'arrière du véhicule, l'axe Oy correspond à un axe transversal du véhicule et l'axe Oz est vertical, orienté vers le haut. Les orientations des pièces vers l'avant, vers le haut, à gauche ou à droite et vers l'arrière se réfèrent à chacun des repères orthonormés des figures.

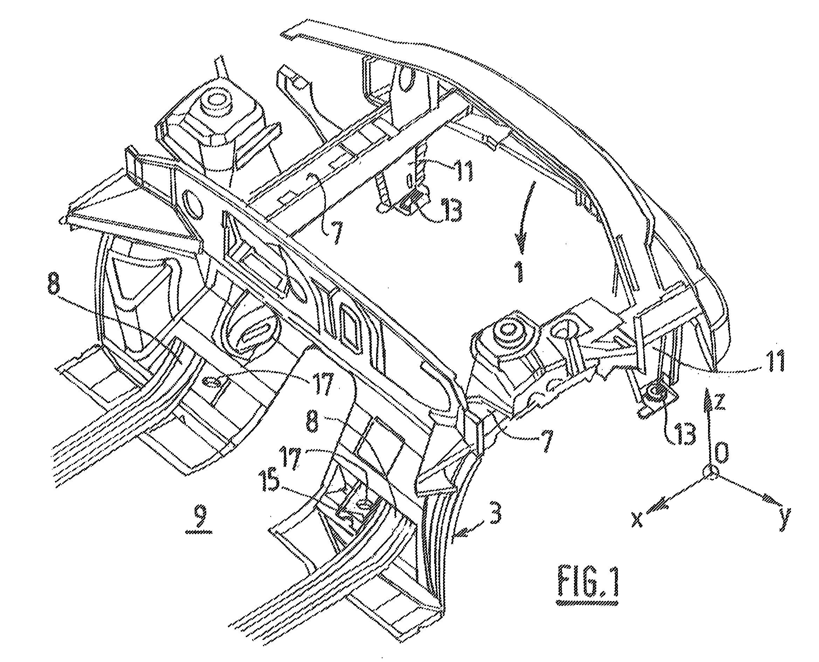

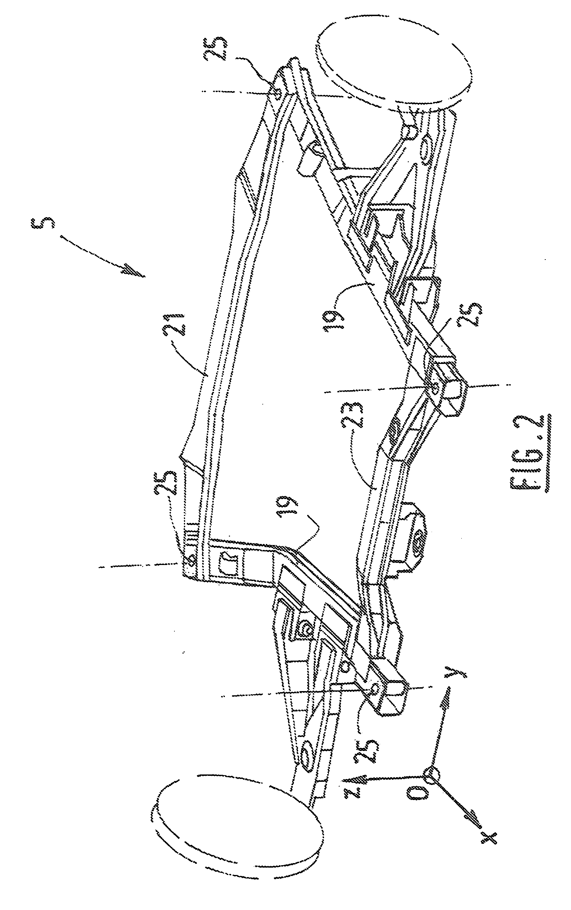

La figure 1 représente la partie avant 1 d'un soubassement 3 d'un véhicule de type berline sur laquelle est monté le berceau de moteur 5 du véhicule (figure 2).

Le soubassement de véhicule 3 comporte avec symétrie relativement à un plan longitudinal médian du véhicule deux longerons 7 parallèles, coudés vers le haut en 8 au niveau de la séparation de l'habitacle 9 de la partie avant 1 du véhicule et s'étendant sensiblement horizontalement dans la partie avant 1. Sur chacun de ces longerons 7, à un niveau proche de leur extrémité avant, est fixé un pied vertical 11, sur la base inférieure 13 duquel est fixé une partie avant latérale du berceau 5.

Sur le soubassement 3 au niveau inférieur de chacun des coudes 8, à proximité de chacun de ceux-ci et vers l'intérieur, est fixée une plaque de renfort 15 pourvue d'un écrou soudé 17 qui reçoit en fixation au moyen d'une vis (non représentée) la partie arrière latérale du berceau de moteur 5.

Le berceau de moteur 5, tel que représenté à la figure 2 comporte avec symétrie relativement à un plan longitudinal médian deux longerons 19 tournés vers l'extérieur à l'avant et aux extrémités desquels sont fixées deux traverses sensiblement parallèles, respectivement une traverse avant 21 et une traverse arrière 23. Cet ensemble a la forme d'un parallélogramme à chacun des angles duquel est formé un trou transversal 25 recevant une vis de fixation du berceau au soubassement et constituant un des quatre points de fixation du berceau au soubassement.

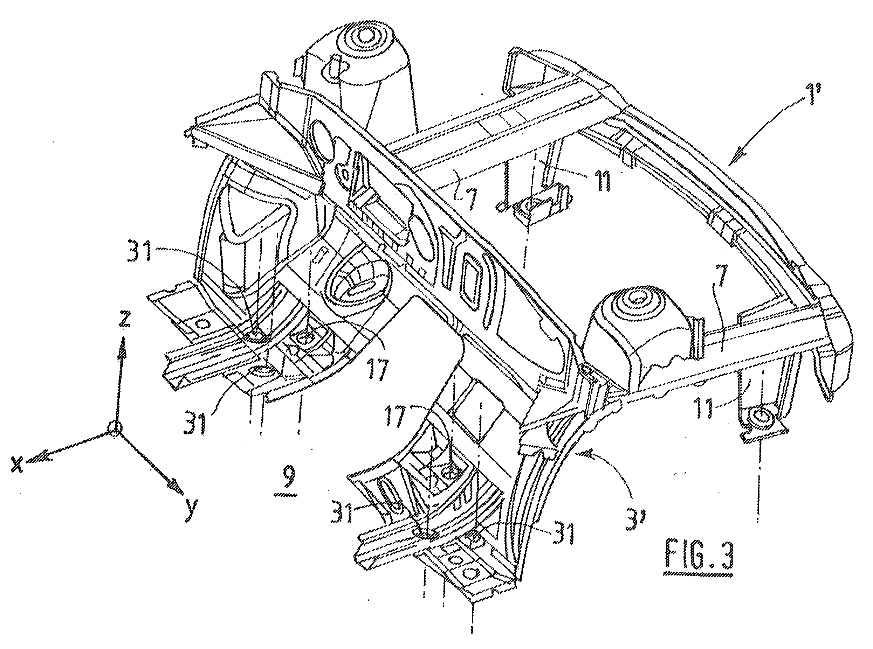

La figure 3 représente la partie avant 1' de soubassement 3' du véhicule précité adapté à un type 4x4, à savoir avec une caisse rehaussée par rapport au précédent. Cette partie avant 1' comporte le soubassement du véhicule de type berline précité sur lequel ont été montés des éléments de renfort auxdits autres points de fixation de chacune des chapes sur le soubassement, et elle reçoit un berceau de moteur 5 identique à celui du véhicule de type berline précité. Le montage du berceau 5 sur le soubassement 3' a été adapté au cahier des charges, notamment au choc, du véhicule de type 4 x 4.

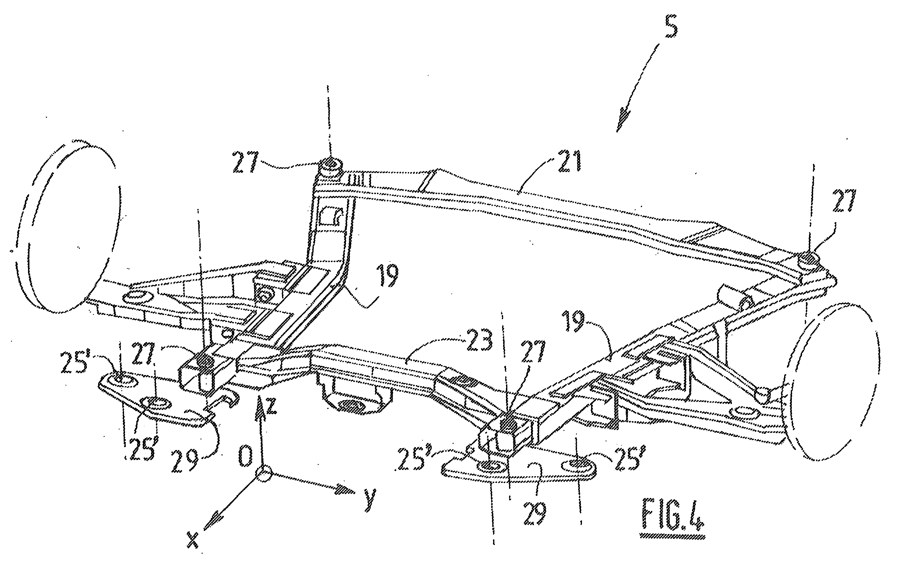

Les fixations notamment sont renforcées. Il fait intervenir quatre bagues entretoises 27 (figure 4), d'environ 50 mm de hauteur, disposées sur le berceau, chacune sur un trou 25 à chacun des points de fixation du berceau au soubassement, et deux chapes identiques 29 montées sous le berceau, chacune sous un trou 25 à chacun des points de fixation arrière du berceau au soubassement. Ces chapes sont en outre reliées au soubassement, sous celui-ci, par deux autres points de fixation par vis, dont on voit les trous 25' sur les chapes.

L'ensemble présente un plan de symétrie longitudinal médian.

Naturellement, à l'endroit des points de fixation de chacune des chapes 29 au soubassement sont fixés sur le soubassement des éléments de renfort 31 de la liaison. Le soubassement est ainsi renforcé au niveau de chacun des autres points de fixation de chape au soubassement par une plaque de renfort 31 soudée sur la tôle de soubassement, laquelle est percée pour le passage de la vis de fixation correspondante successivement dans la chape, dans le soubassement et la plaque de renfort. Un écrou 33 soudé à la plaque de renfort 31 sur son dessus permet la mise en prise de la vis de fixation et renforce la liaison du berceau au soubassement par l'intermédiaire de la chape.

Le berceau est donc solidarisé au soubassement en huit points de fixation, deux à l'avant sur les bagues entretoises 27 avant et six à l'arrière, à savoir les deux points de fixation principaux sur les bagues entretoises arrière 27 et les deux fois deux autres points de fixation des chapes 29 sur le soubassement.

Le montage du berceau est ainsi consolidé relativement à celui du véhicule de type berline précédent et empêche notamment toute intrusion du berceau dans le soubassement et dans l'habitacle au choc.

Le montage du berceau 5 du véhicule de type 4 x 4 sur le soubassement 3' est très simple. Il s'agit de souder les plaques de renfort 31 sur le soubassement au niveau de chacun des autres points de fixation des chapes, de disposer les bagues entretoises 27 sur le berceau et de monter celui-ci avec le moteur sur le soubassement, étant élevé sous ce dernier. Il ne reste que plus qu'à mettre en place les vis de fixation dans les trous 25 et 25' de chacun des points de fixation et à les serrer sur le soubassement.

La présente invention apporte ainsi un dispositif de fixation d'un berceau de moteur à un soubassement de véhicule automobile de type berline qui permet son adaptation et de façon peu onéreuse à un véhicule de type 4 x 4 à caisse surélevée en conservant l'architecture de base du véhicule automobile de type berline.

## Revendications

1. Dispositif de fixation d'un berceau de moteur (5) à un soubassement (3') de véhicule, pour adapter le véhicule d'un type berline à un type 4 x 4 à caisse relevée, le soubassement (3') du véhicule dans sa partie avant (1') étant adapté pour recevoir en fixation, par des points de fixation (25), le berceau de moteur (5), dispositif **caractérisé en ce qu'**il comprend :
- des bagues entretoises (27) destinées à être montées chacune sur un des dits points de fixation du berceau de moteur (5) au soubassement (3'), entre ledit berceau de moteur (5) et le soubassement (3') ;
- au moins une chape de fixation (29) montée en un des points (25) de fixation du berceau de moteur (5) au soubassement (3') et comprenant au moins un autre point (25') de fixation au soubassement (3') ; et
- au moins un élément de renfort (31) monté sur le soubassement (3') audit autre point (25') de fixation de la chape (29) sur le soubassement (3').

2. Dispositif de fixation selon la revendication 1, **caractérisé en ce que** les bagues entretoises (27) sont toutes de même hauteur.

3. Dispositif de fixation selon la revendication 1 dans lequel le véhicule est un véhicule automobile dont le soubassement de caisse (3') comporte deux longerons sensiblement parallèles (7) dans la partie avant (1') du véhicule et supportant le berceau de moteur (5), ce dernier étant de configuration en parallélogramme et fixé au soubassement (3') en quatre points (25) de fixation correspondant aux angles du parallélogramme, respectivement deux points de fixation avant et deux points de fixation arrière, **caractérisé en ce que** les bagues entretoises (27) destinées à être montées sur les deux points de fixation arrière sont d'une hauteur différente de celle des deux bagues destinées à être montées sur les points de fixation avant.

4. Dispositif de fixation selon l'une quelconque des revendications précédentes, **caractérisé en ce que** les chapes (29) comportent chacune deux autres points de fixation (25') au soubassement.

5. Utilisation d'un dispositif de fixation d'un berceau de moteur (5) au soubassement (3') d'un véhicule, selon l'une quelconque des revendications précédentes, pour adapter un véhicule de type berline à un véhicule de type 4x4 à caisse relevée.

6. Utilisation d'un dispositif de fixation selon la revendication précédente pour la fixation d'un berceau de moteur (5) au soubassement (3') d'un véhicule, ledit soubassement de caisse (3') comportant deux longerons sensiblement parallèles (7) dans la partie avant (1') du véhicule et supportant le berceau de moteur (5), ce dernier étant de configuration en parallélogramme et fixé au soubassement (3') en quatre points (25) de fixation correspondant aux angles du parallélogramme, respectivement deux points de fixation avant et deux points de fixation arrière, **caractérisée en ce que** les chapes (29) sont montées aux points de fixation arrière.

7. Véhicule comportant un dispositif de fixation selon l'une quelconque des revendications 1 à 4.

## Patentansprüche

1. Vorrichtung zur Befestigung einer Motorhalterung (5) an einem Fahrzeug-Unterboden (3'), um das Fahrzeug vom Typ Limousine an einen Typ Allradantrieb mit hochgelegter Karosserie anzupassen, wobei der Unterboden (3') des Fahrzeugs in seinem vorderen Bereich (1') geeignet ist, um die Motorhalterung (5) durch Befestigungspunkte (25) befestigt aufzunehmen, wobei die Vorrichtung **dadurch gekennzeichnet ist, dass** sie enthält:
- Abstandsringe (27), die dazu bestimmt sind, je auf einen der Befestigungspunkte der Motorhalterung (5) am Unterboden (3') zwischen der Motorhalterung (5) und dem Unterboden (3') montiert zu werden;
- mindestens einen Befestigungsgabelkopf (29), der an einem der Befestigungspunkte (25) der Motorhalterung (5) am Unterboden (3') montiert ist und mindestens einen anderen Befestigungspunkt (25') am Unterboden (3') enthält; und
- mindestens ein Verstärkungselement (31), das auf den Unterboden (3') am anderen Befestigungspunkt (25') des Gabelkopfs (29) am Unterboden (3) montiert ist.

2. Befestigungsvorrichtung nach Anspruch 1, **dadurch gekennzeichnet, dass** die Abstandsringe (27) alle die gleiche Höhe haben.

3. Befestigungsvorrichtung nach Anspruch 1, wobei das Fahrzeug ein Kraftfahrzeug ist, dessen Karosserie-Unterboden (3') zwei im Wesentlichen parallele Längsträger (7) im vorderen Bereich (1') des Fahrzeugs und die Motorhalterung (5) tragend aufweist, wobei letztere als Parallelogramm konfiguriert und am Unterboden (3) an vier Befestigungspunkten (25) entsprechend den Winkeln des Parallelogramms befestigt ist, jeweils zwei vorderen Befestigungspunkten und zwei hinteren Befestigungspunkten, **dadurch gekennzeichnet, dass** die Abstandsringe (27), die dazu bestimmt sind, auf die zwei hinteren Befestigungspunkte montiert zu werden, eine andere Höhe haben als diejenige der zwei Ringe, die dazu bestimmt sind, auf die vorderen Befestigungspunkte montiert zu werden.

4. Befestigungsvorrichtung nach einem der vorhergehenden Ansprüche, **dadurch gekennzeichnet, dass** die Gabelköpfe (29) je zwei weitere Befestigungspunkte (25') am Unterboden aufweisen.

5. Verwendung einer Befestigungsvorrichtung einer Motorhalterung (5) am Unterboden (3') eines Fahrzeugs nach einem der vorhergehenden Ansprüche, um ein Fahrzeug vom Typ Limousine an ein Fahrzeug vom Typ Allradantrieb mit hochgelegter Karosserie anzupassen.

6. Verwendung einer Befestigungsvorrichtung nach dem vorhergehenden Anspruch zur Befestigung einer Motorhalterung (5) am Unterboden (3') eines Fahrzeugs, wobei der Karosserie-Unterboden (3') zwei im Wesentlichen parallele Längsträger (7) im vorderen Bereich (1') des Fahrzeugs und die Motorhalterung (5) tragend aufweist, wobei letztere als Parallelogramm konfiguriert und am Unterboden (3') an vier Befestigungspunkten (25) befestigt ist, die den Winkeln des Parallelogramms entsprechen, jeweils zwei vorderen Befestigungspunkten und zwei hinteren Befestigungspunkten, **dadurch gekennzeichnet, dass** die Gabelköpfe (29) an den hinteren Befestigungspunkten montiert sind.

7. Fahrzeug, das eine Befestigungsvorrichtung nach einem der Ansprüche 1 bis 4 aufweist.

## Claims

1. Device for attaching an engine cradle (5) to a vehicle body understructure (3') in order to adapt the vehicle from a saloon type to a 4x4 type with a raised body shell, the vehicle body understructure (3') in its front part (1') being designed to accept for attachment, via attachment points (25), the engine cradle (5), the device being **characterized in that** it comprises:
- spacer rings (27) each indented to be mounted on one of said points of attachment of the engine cradle (5) to the body understructure (3') between said engine cradle (5) and the body understructure (3');
- at least one anchor plate (29) mounted at one of the points (25) of attachment of the engine cradle (5) to the body understructure (3') and comprising at least one other point (25') of attachment to the body understructure (3'); and
- at least one reinforcing element (31) mounted on the body understructure (3') at said other point (25') of attachment of the anchor plate (29) to the body understructure (3').

2. Attachment device according to Claim 1, **characterized in that** the spacer rings (27) are all of the same height.

3. Attachment device according to Claim 1, in which the vehicle is a motor vehicle the body understructure (3') of which comprises two substantially parallel chassis frame side members (7) in the front part (1') of the vehicle and which support the engine cradle (5), the latter being of a parallelogram configuration and attached to the body understructure (3') at four attachment points (25) corresponding to the corners of the parallelogram, these respectively being two front attachment points and two rear attachment points, **characterized in that** the spacer rings (27) intended to be mounted on the two rear attachment points are of a different height to the two rings intended to be mounted on the front attachment points.

4. Attachment device according to any one of the preceding claims, **characterized in that** the anchor plates (29) each comprise two other points (25') of attachment to the body understructure.

5. Use of a device for attaching an engine cradle (5) to the body understructure (3') of a vehicle according to any one of the preceding claims, so as to adapt a vehicle of the saloon type to a vehicle of the 4x4 type with a raised body shell.

6. Use of an attachment device according to the preceding claim for attaching a vehicle cradle (5) to the body understructure (3') of a vehicle, said body understructure (3') comprising two substantially parallel chassis frame side members (7) in the front part (1') of the vehicle and which support the engine cradle (5), the latter being of a parallelogram configuration and attached to the body understructure (3') at four attachment points (25) corresponding to the corners of the parallelogram, these respectively being two front attachment points and two rear attachment points, **characterized in that** the anchor plates (29) are mounted at the rear attachment points.

7. Vehicle comprising an attachment device according to any one of Claims 1 to 4.
